(19) Europäisches Patentamt
European Patent Office
Office européen des brevets

(11) **EP 0 614 052 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int Cl.6: **F23Q 7/24**, F23N 5/20

(21) Anmeldenummer: **93114745.8**

(22) Anmeldetag: **14.09.1993**

(54) **Feuerungsautomat**

Automatic ignition device

Appareil automatique d'allumage

(84) Benannte Vertragsstaaten:
**CH DE FR GB IT LI NL**

(30) Priorität: **05.03.1993 CH 664/93**

(43) Veröffentlichungstag der Anmeldung:
**07.09.1994 Patentblatt 1994/36**

(73) Patentinhaber: **Landis & Gyr Technology Innovation AG**
**6301 Zug (CH)**

(72) Erfinder:
• **Hickl, Erich**
**D-7502 Malsch (DE)**

• **Hoffmann, Jürgen, Dipl.-Ing. (FH)**
**D-7550 Rastatt (DE)**

(74) Vertreter: **Müller, Hans-Jürgen, Dipl.-Ing. et al**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach 101161**
**80085 München (DE)**

(56) Entgegenhaltungen:
**WO-A-88/10400**        **GB-A- 2 104 683**

**Beschreibung**

Die Erfindung bezieht sich auf einen Feuerungsautomaten gemäß dem Oberbegriff des Anspruchs 1.

Aus der WO-A-88/10 400 ist eine Schaltung bekannt, bei der in Reihe mit dem Glühzünder ein Thyristor geschaltet ist. Dieser Thyristor wird mittels einer Phasenanschnitts-Steuerung derart angesteuert, daß nur solche Zündungswinkel zum Einsatz kommen, die jeweils einzelne komplette Halbwellenzüge der Versorgungsspannung dem Glühzünder zuführen. Ein beträchtlicher Aufwand an Entstörmitteln ist damit zwar entbehrlich, jedoch ergibt sich eine nachteilige einseitige Belastung der Spannungsversorgung, die sich ungünstig auf andere Schaltungsteile, wie beispielsweise auf eine Gleichspannungsversorgung für andere Teile des Feuerungsautomaten auswirkt. Dies gilt besonders dann, wenn etwa Operationsverstärker im Rahmen der Gesamtschaltung betrieben werden müssen.

Solche Feuerungsautomaten eignen sich beispielsweise zur Steuerung des Inbetriebsetzungsvorgangs für einen Brenner zur Wärmeerzeugung in einem Heizungssystem, bei dem als Brennstoff Gas zur Anwendung kommt.

Es ist ein Feuerungsautomat dieser Art bekannt (US-PS 4,099,906), bei dem als Zündelement für das Gas-Luft-Gemisch ein unter dem Begriff "Hot Surface Igniter" bekannter Glühzünder verwendet wird. Solche Glühzünder sind in Ländern mit einem 120 Volt-Wechselstrom-Netz seit Jahren gebräuchlich und am Markt erhältlich. Die Herstellung solcher Glühzünder für den Betrieb mit 230 Volt scheitert an den Eigenschaften des für solche Glühzünder verwendbaren Materials, das beispielsweise Siliziumcarbid sein kann. Deshalb sind solche Glühzünder noch nicht erhältlich.

Es bieten sich mehrere Möglichkeiten an, einen für den Betrieb mit 120 Volt ausgelegten Glühzünder an einem 230 Volt-Netz zu betreiben. Einmal besteht die Möglichkeit, einen Transformator anzuwenden, um die Spannung von 230 Volt auf 120 Volt herunterzutransformieren. Angesichts der benötigten Leistung von etwa 400 Watt hätte ein solcher Transformator ein Volumen, das in einem der üblichen Gehäuse eines Feuerungsautomaten nicht unterzubringen wäre. Wegen der Platzverhältnisse an einem Brenner kann das Gehäuse aber nicht vergrößert werden. Zudem wäre ein solcher Transformator ein wesentlicher Kostenfaktor.

Als Alternative bietet sich die Anwendung einer Phasenanschnitts-Steuerung mittels Thyristoren an. Diese wiederum hat den Nachteil, daß es notwendig wäre, beträchtlichen Aufwand an Entstörmitteln zu treiben, um die bei solchen Schaltungen unweigerlich auftretenden Funkstörungen auf ein den einschlägigen Vorschriften entsprechendes Maß zu dämpfen.

Angesichts der großen Leistung nehmen diese Entstörmittel ihrerseits auch einen großen Raum ein.

Der Erfindung liegt die Aufgabe zugrunde, einen Feuerungsautomaten zu schaffen, der ohne die vorgenannten Nachteile die Ansteuerung eines Glühzünders der genannten Art erlaubt.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1     ein Schema einer Ansteuerschaltung für einen Glühzünder,

Fig. 2     ein Diagramm der am Glühzünder umgesetzten Leistung als Funktion der Betriebsspannung,

Fig. 3     ein Schema einer bevorzugten Ausführungsform der Erfindung und

Fig. 4     ein Schema einer Gleichspannungsquelle für die Verwendung in Verbindung mit der vorgenannten Ausführungsform.

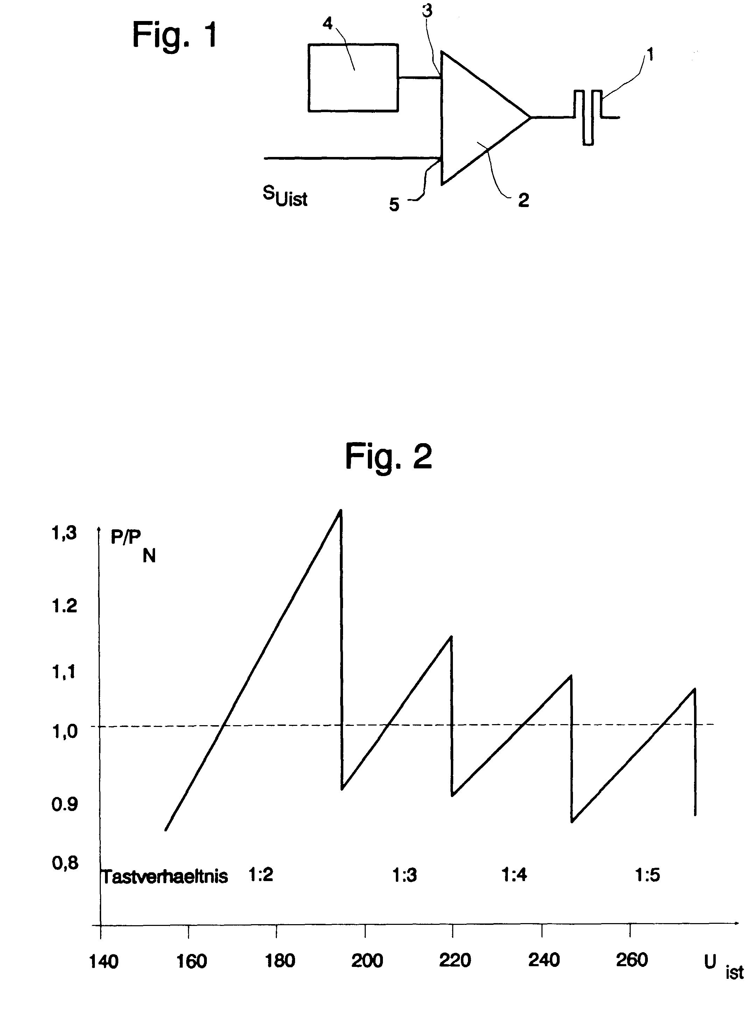

In der Fig. 1 ist mit der Bezugszahl 1 ein bekannter Glühzünder dargestellt, der unter dem Begriff "Hot Surface Igniter (HSI)" in der Fachwelt geläufig ist. Dieser Glühzünder 1 wird von einem Leistungssteller 2 mit Spannung und Strom versorgt. Dieser Leistungssteller 2 besitzt einen ersten Eingang 3, der mit einem Sollwertgeber 4 verbunden ist. An einem zweiten Eingang 5 des Leistungsstellers 2 liegt ein Signal $S_{Uist}$ an, das die tatsächliche Höhe der Versorgungsspannung $U_{ist}$ für einen Feuerungsautomaten darstellt. Das Signal $S_{Uist}$ repräsentiert die jeweils aktuelle Spannung, also den herrschenden Istwert, der in gewissen Grenzen schwanken kann.

Der Sollwertgeber 4 gibt ein Signal ab, das einen Sollwert einer Netzspannung von 120 Volt repräsentiert.

Der Leistungssteller 2 vergleicht die an seinen Eingängen 3 und 5 anliegenden Signale und erzeugt ein aus einzelnen Paketen von Sinuswellen einer Wechselspannung bestehendes Ausgangssignal mit einem solchen Tastverhältnis TV, daß die am Glühzünder 1 umgesetzte Leistung bei der herrschenden Spannung $U_{Ist}$ annähernd gleich groß ist wie jene Leistung, die am Glühzünder 1 umgesetzt wird, wenn dieser an einer Nennspannung von 120 Volt betrieben wird. Das Tastverhältnis TV wird demgemäß in Abhängigkeit von der Spannung $U_{Ist}$ variiert. Dabei erfolgt dann Ein- und Abschalten des Strompfades in bekannter Weise immer im Moment des Nulldurchgangs, so daß keine Störimpulse entstehen.

Beträgt die Spannung $U_{Ist}$ 230 Volt, so nimmt das Tastverhältnis TV den Wert 1:4 an, was bedeutet, daß nur ein Viertel aller Sinusschwingungen, z.B. jede vierte volle Sinusschwingung der Spannung an den Glühzünder 1 gelangt. Damit ist die am Glühzünder 1 umgesetzte Leistung etwa gleich groß wie dann, wenn der Glühzünder 1 an 120 Volt betrieben wird. Beträgt die Spannung $U_{Ist}$ nur 210 Volt, so nimmt das Tastverhältnis TV den Wert 1:3 an, so daß nur ein Drittel aller Sinusschwingungen, z.B. jede dritte volle Sinusschwingung der Spannung an den Glühzünder 1 gelangt. Bei einer Spannung von 210 Volt und einem Tastverhältnis TV von 1:3 ist die am Glühzünder 1 umgesetzte Leistung wiederum etwa gleich groß wie beim Betrieb an 120 Volt.

In der einfachsten Form der Erfindung kann der Leistungssteller 2 ohne den Vergleich von Ist- und Bezugswert der Spannung realisiert sein und fest so eingestellt sein, daß er den Glühzünder mit einem Tastverhältnis TV von 1:4 aus der Nennspannung versorgt. Er läßt dann nur jeden vierten Sinusschwingungszug der Nennspannung zum Glühzünder 1 hindurch, sperrt also drei von vier Wellenzügen. Eine solche vereinfachte Lösung ist immer dann anwendbar, wenn der Feuerungsautomat so gestaltet ist, daß er bei größeren Schwankungen der Versorgungsspannung ohnehin durch einen Unter- und einen Überspannungsschalter abgeschaltet wird.

In der Fig. 2 ist das relative Leistungsverhältnis $P/P_N$ für die am Glühzünder 1 umgesetzte Leistung in Funktion von der Größe der Spannung $U_{ist}$ dargestellt. Das Leistungsverhältnis $P/P_N$ gehorcht dabei der Formel

$$P/P_N = \frac{U_v^{\,2}}{U_{ist}^{\,2} / TP + 1},$$

wobei $U_v$ der Wert der Nennbetriebsspannung des Glühzünders 1, nämlich 120 V, ist und TP die Zahl der zwischen zwei durchgelassenen vollen Sinusschwingungen gesperrten Sinusschwingungen. Der Wert TP ist dabei identisch mit dem um die Zahl 1 verminderten Kehrwert des Tastverhältnisses TV.

Das Tastverhältnis wird vom Leistungssteller 2 in Funktion der Spannung $U_{ist}$ variiert. Ist der Glühzünder 1 wie erwähnt für eine Nennspannung von 120 Volt ausgelegt, wird das Tastverhältnis TV nach der folgenden Formel berechnet:

$$TV = \frac{1}{INT\left(\left(\frac{U_{ist}}{120}\right)^2 + 0,5\right)}$$

Eine derartige Stabilisierung der am Glühzünder 1 umgesetzten Leistung hat den Vorteil, daß die Aufheizzeit für den Glühzünder 1, die im Rahmen des Inbetriebsetzungsprozedere wesentlich ist, auch bei größeren Spannungsänderungen annähernd konstant bleibt. Auch die erreichte Glühtemperatur unterliegt dann nur solchen Schwankungen, die noch tolerierbar sind.

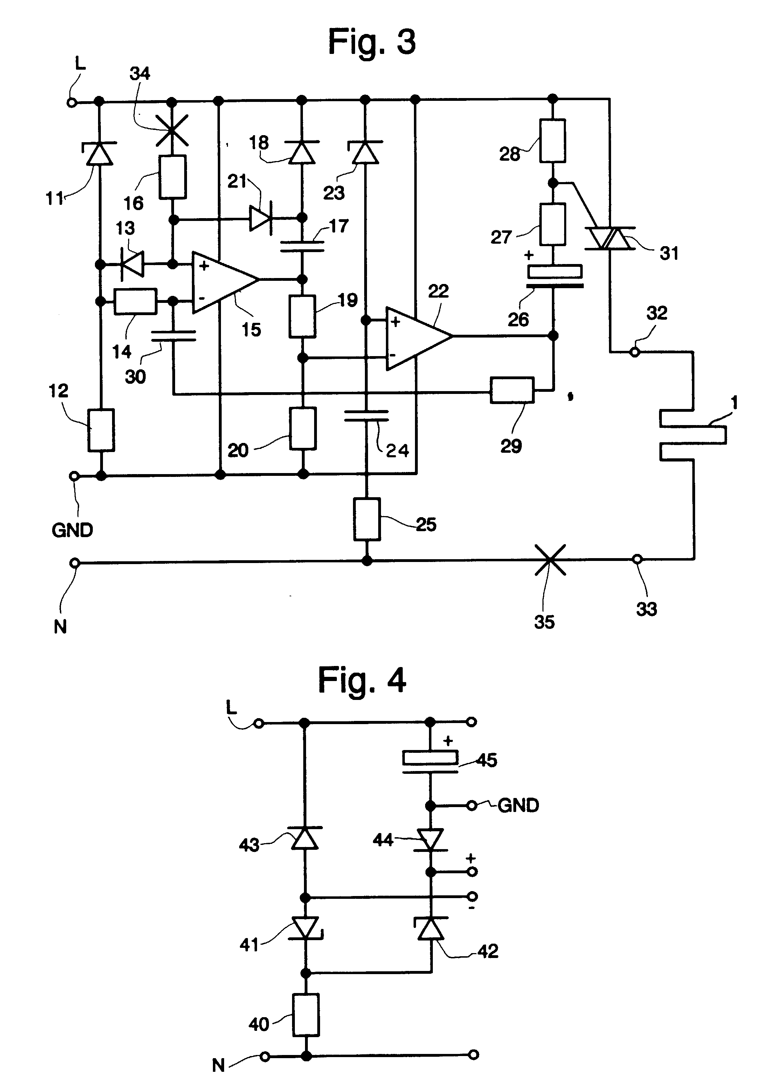

In der Fig. 3 ist eine bevorzugte Ausführung des Leistungsstellers 2 dargestellt, die auch den Sollwertgeber 4 beinhaltet. Mit L ist der Phasenanschluß der Netzspannung bezeichnet, mit N der Nulleiter der Netzspannung und mit GND eine Bezugserde. Eine nicht dargestellte Gleichspannungsquelle ist mit ihrem Pluspol an den Phasenanschluß L angeschlossen. Deren Minuspol bildet die Bezugserde GND. Am Phasenanschluß L ist eine erste Zenerdiode 11 katodenseitig angeschlossen. Deren Anodenanschluß steht einerseits über einen ersten Widerstand 12 mit der Bezugserde GND in Verbindung, andererseits mit dem Katodenanschluß einer ersten Diode 13 und einem zweiten Widerstand 14, dessen zweiter Anschluß am invertierenden Eingang eines ersten Operationsverstärkers 15 liegt. Der Anodenanschluß der Diode 13 ist mit dem nicht invertierenden Eingang des Operationsverstärkers 15 verbunden, der über einen dritten Widerstand 16 mit dem Phasenanschluß L in Verbindung steht. Der Ausgang des Operationsverstärkers 15 ist einerseits über einen ersten Kondensator 17 und eine zweite Diode 18 mit dem Phasenanschluß L verbunden, wobei die Diode 18 mit ihrem Katodenanschluß am Phasenanschluß L liegt, und andererseits über eine zwei weitere, hintereinandergeschaltete Widerstände 19, 20 mit der Bezugserde GND verbunden. Zwischen dem nicht invertierenden Eingang des Operationsverstärkers 15 und dem anodenseitigen Anschluß der Diode 18 liegt eine weitere Diode 21 und zwar so, daß die Anode der Diode 21 am nicht invertierenden Eingang des Operationsverstärkers 15 liegt.

Der Verbindungspunkt der Widerstände 19 und 20 ist an den invertierenden Eingang eines zweiten Operationsverstärkers 22 angeschlossen. Der nicht invertierende Eingang des Operationsverstärkers 22 ist einerseits über eine zweite Zenerdiode 23 mit dem Phasenanschluß L verbunden, wobei diese mit ihrem Katodenanschluß am Phasenanschluß L liegt, und andererseits über einen zweiten Kondensator 24 und einen weiteren Widerstand 25 mit dem Nulleiter N.

Am Ausgang des Operationsverstärkers 22 ist ein weiterer Kondensator 26 angeschlossen, dessen zweiter Anschluß mit einer Reihenschaltung zweier weiterer Widerstände 27 und 28 verbunden ist. Der Ausgang des Operationsverstärkers 22 ist zusätzlich über einen weiteren Widerstand 29 und einen weiteren Kondensator 30 auf den invertierenden Eingang des Operationsverstärkers 15 zurückgeführt.

Der Verbindungspunkt der Widerstände 27 und 28 ist an den Steueranschluß eines Triacs 31 geführt. Dessen eine Anode liegt am Phasenanschluß L, während die zweite Anode auf einen ersten Anschlußpunkt 32 geführt ist, an den der Glühzünder 1 anschließbar ist. Der Glühzünder 1 ist andererseits an einen zweiten Anschlußpunkt 33 anschließbar, der mit dem Nulleiter N verbunden ist.

Wesentlich ist, daß die beiden Operationsverstärker 15 und 22 Typen mit Gegentaktausgang sind.

Nicht eingezeichnet sind übliche Elemente eines Feuerungsautomaten, die zwar für die Funktion des Feuerungsautomaten wesentlich sind, aber mit der Funktion der Ansteuerung des Glühzünders 1 nichts zu tun haben. Der Vollständigkeit halber sei aber erwähnt, daß zwischen dem Widerstand 16 und dem Phasenanschluß L an einer Stelle 34 ein Schaltelement vorhanden sein kann, das von einem Flammensignalverstärker betätigbar ist. Ebenso können sich zwischen dem Nullleiter N und dem Anschlußpunkt an einer Stelle 35 Kontakte einer Sicherheitskette befinden.

Nachfolgend wird nun das Wesentliche der Funktion der vorstehend beschriebenen Schaltung beschrieben. Über den Widerstand 16 wird der Kondensator 17 aufgeladen, weil gleichzeitig der Ausgang des Operationsverstärkers 15 auf LOW liegt und damit GND-Potential führt, so daß die Widerstände 19 und 20 wirkungslos sind. Solange die Spannung am Kondensator 17 kleiner ist als der einen Referenzwert darstellenden Wert des aus der Zenerdiode 11 und dem Widerstand 12 gebildeten Spannungsteilers, bleibt der Ausgang des Operationsverstärker 15 auf LOW und die Ladung des Kondensators 17 wird fortgesetzt. Währenddessen ist der Triac 31 gesperrt. Sobald die Spannung am Kondensator 17 den durch den Spannungsteiler 11, 12 gebildeten Wert überschreitet, wechselt der Ausgang des Operationsverstärkers 15 auf HIGH. Damit wechselt auch der invertierende Eingang des Operationsverstärkers 22 auf HIGH. Der nicht invertierende Eingang des Operationsverstärkers 2 liegt zunächst auch auf HIGH-Potential. Bei der nächsten positiven Halbwelle wird aber wegen des Spannungsabfalls über der Zenerdiode 23 die HIGH-Schwelle unterschritten. Das hat zur Folge, daß der Ausgang des Operationsverstärkers 22 auf LOW geht. Damit wird über die Widerstände 28 und 27 und den Kondensator 26 ein Zündimpuls für den Triac 31 erzeugt, wodurch dieser zündet und der Glühzünder (1) Strom erhält.

Sobald nun die positive Halbwelle in die negative übergeht, überschreitet die Spannung am nicht invertierenden Eingang des Operationsverstärkers 22 wieder die HIGH-Schwelle. Damit geht auch der Ausgang des Operationsverstärkers 22 wieder auf HIGH und der Entladestrom des Kondensators 26 erzeugt im Zusammenwirken mit den Widerständen 27 und 28 einen Zündimpuls am Triac 31 für die negative Halbwelle. Gleichzeitig wird über den Widerstand 29 und den Kondensator 30 der invertierende Eingang des Operationsverstärkers 15 auf HIGH gelegt. Demzufolge geht der Ausgang des Operationsverstärkers 15 auf LOW und die Aufladung des Kondensators 17 beginnt erneut.

Es ist offensichtlich, daß durch den aus der Zenerdiode 11 und dem Widerstand 12 gebildeten Spannungsteiler die Schaltschwelle bestimmt wird, so daß dieser Spannungsteiler dem Sollwertgeber 4 (Fig. 1) funktionsmäßig entspricht.

Die Aufladezeit des Kondensators 17 bestimmt die Sperrzeit des Triacs 31. Funktionsbestimmend ist, daß die Gleichspannungsquelle nicht stabilisiert ist, so daß die Höhe ihrer Spannung eine Funktion der Netzspannung ist. Beträgt die Netzspannung 230 Volt, gibt die Gleichspannungsquelle beispielsweise 20 Volt ab. Ist die Netzspannung größer, so ist auch die Spannung der Gleichspannungsquelle größer. Entsprechend ist die Spannung der Gleichspannungsquelle kleiner als 20 Volt, wenn die Netzspannung kleiner ist als 230 Volt.

Andererseits muß sichergestellt werden, daß die Zündung des Triacs 31 immer nur zu Beginn einer Halbwelle erfolgen kann. Dies wird durch das aus dem Widerstand 25 und dem Kondensator 24 gebildete RC-Glied in Verbindung mit der Zenerdiode 23 erreicht, die den Pegel am nicht invertierenden Eingang des Operationsverstärkers 22 bestimmen und die Generierung von Zündimpulsen für den Triac 31 verhindern, wenn die Spannung innerhalb einer Halbwelle eine bestimmte Höhe bereits überschritten hat, so daß dann die Zündung des Triacs 31 erst bei der nächsten positiven Halbwelle erfolgen kann.

Damit ist die am Widerstand 12 abfallende Spannung ebenfalls eine Funktion der Höhe der Netzspannung. Hat die Zenerdiode 11 beispielsweise eine Zenerspannung von 12 Volt, so fallen am Widerstand 12 bei einer Netzspannung von 230 Volt entsprechend einer Gleichspannung von 20 Volt etwa 8 Volt ab. Dieser Spannungsabfall schwankt mit der Netzspannung. Weil nun der Schaltzustand des Operationsverstärkers 15 einerseits vom Spannungsabfall am Widerstand 12 und andererseits von der Höhe der Ladespannung des Kondensators 17 bestimmt wird, ist die Dauer des Ladevorgangs für den Kondensator 17 bestimmend für den Schaltzustand des Operationsverstärkers 15. Ist die Netzspannung kleiner, ist folglich der Spannungsabfall am Widerstand 12 kleiner. Damit sinkt die Schwelle für die Umschaltung des Operationsverstärkers 15. Folglich erfolgt die Umschaltung des Operationsverstärkers von LOW auf HIGH bereits bei einer kleineren Spannung am Kondensator 17, also zu einem früheren Zeitpunkt. Bei einer Netzspannung von 230 Volt erreicht die zur Umschaltung des Operationsverstärkers 15 führende Ladespannung am Kondensator 17 erst zu einem Zeitpunkt die nötige Höhe, da gerade der dritte aufeinanderfolgende Wellenzug der Netzspannung, während der der Triac 31 gesperrt war, wirksam ist. Am Beginn des nachfolgenden vierten Wellenzugs erfolgt dann die Zündung des Triacs 31, so daß dieser dann während des vierten Wellenzugs leitend ist und der Glühzünder 1 Strom erhält. Damit wird ein Tastverhältnis TV von 1: 4 erreicht.

Bei einer Netzspannung von nur 210 Volt erreicht die zur Umschaltung des Operationsverstärkers 15 führende Ladespannung am Kondensator 17 schon zu einem Zeitpunkt die nötige Höhe, da gerade der zweite aufeinanderfolgende Wellenzug der Netzspannung, während der der Triac 31 gesperrt war, wirksam ist. Am Beginn des nachfolgenden dritten Wellenzugs erfolgt dann die Zündung des Triacs, so daß dieser dann während des dritten Wellenzugs leitend ist und der Glühzünder 1 Strom erhält. Damit wird also ein Tastverhältnis TV von 1:3 erreicht.

Für das Funktionieren der angegebenen Schaltung ist der als Operationsverstärker 15, 22 zu verwendende Typ ebenso wesentlich wie die Dimensionierung der übrigen Bauelemente. Deshalb wird nachfolgend eine Bauteile-Liste angegeben:

| Zenerdiode 11 | BZX55C - 12 V |
|---|---|
| Widerstand 12 | 3,3 kOhm |
| Diode 13 | 1N4148 |
| Widerstand 14 | 33 kOhm |
| Operationsverstärker 15 | 1/2 LM 358N |
| Widerstand 16 | 3,3 MOhm |
| Kondensator 17 | 68 nF |
| Diode 18 | 1N4148 |
| Widerstand 19 | 15 kOhm |
| Widerstand 20 | 100 kOhm |
| Diode 21 | 1N4148 |
| Operationsverstärker 22 | 1/2 LM 358N |
| Zenerdiode 23 | BZX55C - 7,5 V |
| Kondensator 24 | 68 nF |
| Widerstand 25 | 1 MOhm |
| Kondensator 26 | 2,2 µF |
| Widerstand 27 | 680 Ohm |
| Widerstand 28 | 1 kOhm |
| Kondensator 30 | 10 nF |
| Triac 31 | TO 809 NH |

Die wie vorstehend dimensionierte Schaltung ergibt eine Leistungsregelung wie in der Fig. 2 dargestellt.

Ist an der Stelle 34 ein von einem Flammensignalverstärker betätigter Schalter vorhanden, der beispielsweise eine Transistor sein kann, dann wird in dem Moment, da das Flammensignal erscheint, dieser Schalter geöffnet, so daß der Kondensator 17 nachfolgend nicht mehr aufgeladen werden kann. In der Folge unterbleibt anschließend das Heizen des Glühzünders 1.

Vorstehend beschrieben wurden Lösungen, bei denen das Tastverhältnis TV von 1:n dadurch gekennzeichnet ist, daß von n aufeinanderfolgenden Wellenzügen nur ein einziger am Glühzünder 1 wirksam werden kann, während n-1 aufeinanderfolgende Wellenzüge gesperrt bleiben. Denkbar wäre, ohne den Rahmen der Erfindung zu verlassen, auch eine Wellenzug-Paketsteuerung der Art, daß jeweils i Wellenzüge durchgelassen und i·(N-1) Wellenzüge gesperrt werden.

Die Fig. 4 zeigt ein Schema der Gleichspannungsquelle für die Verwendung in Verbindung mit der vorgenannten Ausführungsform, bei der die erzeugte Spannung mit der jeweiligen Netzspannung unmittelbar zusammenhängt, so daß die Höhe der Gleichspannung gleichzeitig ein Maß für die Höhe der Netzspannung ist. Der Istwert der Netzspannung ist, wie zuvor schon erwähnt, entscheidend für die Bestimmung der richtigen Tastverhältnisses TV.

Mit dem Nulleiter N ist ein Vorwiderstand 40 verbunden. Dessen zweiter Anschlußpunkt ist mit der Katode einer Zenerdiode 41 und mit der Anode einer Zenerdiode 42 verbunden. Die Anode der Zenerdiode 41 steht in Verbindung mit der Anode einer Diode 43, deren Katode an den Phasenanschluß L gelegt ist. Die Katode der Zenerdiode 42 ist mit der Katode einer Diode 44 verbunden, an deren Anode ein Kondensator 45 angeschlossen ist, der mit seinem zweiten Anschluß am Phasenanschluß L liegt. Der Anodenanschluß der Diode 44 stellt die Bezugserde GND dar. Über dem Kondensator 45 baut sich eine Spannung auf, die von der Höhe der Netzspannung, die zwischen dem Phasenanschluß L und dem Nulleiter N herrscht, abhängt. Der Verbindungspunkt zwischen der Anode der Zenerdiode 41 und der Diode 43 stellt gleichzeitig den Minuspol einer weiteren Gleichspannungsquelle dar, die zur Versorgung anderer Teile des Feuerungsautomaten, beispielsweise der Relais und deren Ansteuerung, verwendet werden kann. Der Pluspol dieser weiteren Gleichspannungsquelle wird durch den Katodenanschluß der Zenerdiode 42 gebildet.

Die Zenerdioden 41 und 42 sind beispielsweise vom Typ BZX85C-24 V und die Dioden 43 und 44 vom Typ 1N4007. Der Kondensator 45 hat eine Kapazität von 100 µF.

Der erfindungsgemäße Feuerungsautomat erlaubt die Verwendung von für den Betrieb an 120 Volt ausgelegten Glühzündern 1 an höheren Netzspannungen, beispielsweise 230 Volt. Der direkte Betrieb eines solchen Glühzünders 1 an einer solchen Netzspannung bietet den Vorteil, daß der Glühzünder 1 gleichzeitig auch als Fühlerelektrode eines Ionisationsfühlers zur Flammenüberwachung eingesetzt werden kann.

Mit einem Leistungssteller 2 nach dem vorgenannten Ausführungsbeispiel lassen sich nur solche Tastverhältnisse TV realisieren, deren Kehrwert ganzzahlig ist. Bei Anwendung einer Schaltung mit einer Vollwellen-Impulspaket-Steuerung allgemeiner Art lassen sich aber auch Tastverhältnisse TV erreichen, deren Kehrwert nicht geradzahlig ist. Werden vom Leistungssteller 2 beispielsweise zwei Vollwellen durchgelassen und die nachfolgenden sieben Vollwellen gesperrt, so ergibt sich ein Tastverhältnis TV von 1:3,5. Damit läßt sich eine noch bessere Leistungsanpassung erreichen.

**Patentansprüche**

1.   Feuerungsautomat mit Mitteln zur Ansteuerung eines Glühzünders (1), durch die der Glühzünder (1) mittels Netzspannung aufheizbar ist, wobei dem Glühzünder (1) ein Leistungssteller (2) vorgeschaltet ist,
dadurch gekennzeichnet,
daß der Leistungssteller (2) die Netzspannung mit einem einstellbaren Tastverhältnis TV derart taktet, daß nur einzelne ganze Vollwellenzüge der Netzspannung am Glühzünder (1) wirksam werden.

**2.** Feuerungsautomat nach Anspruch 1, dadurch gekennzeichnet, daß der Glühzünder (1) für den Betrieb an 120 Volt ausgelegt ist, daß die Netzspannung 230 Volt (-15/+10 %) beträgt und das Tastverhältnis TV des Leistungsstellers (2) 1:4 beträgt.

**3.** Feuerungsautomat nach Anspruch 2, dadurch gekennzeichnet, daß das Tastverhältnis TV von 1:4 dadurch realisiert ist, daß nach dem Durchlassen eines vollen Wellenzuges der Netzspannung der Leistungssteller (2) nachfolgend drei volle Wellenzüge der Netzspannung sperrt.

**4.** Feuerungsautomat nach Anspruch 1, dadurch gekennzeichnet, daß der Leistungssteller (2) einen ersten Eingang (3) aufweist, an dem ein Signal anliegt, daß der auslegungsmäßigen Nennspannung für den Betrieb des Glühzünders (1) entspricht, daß er einen zweiten Eingang (5) aufweist, an dem ein der Netzspannung entsprechendes Signal anliegt, und daß das Tastverhältnis TV des Leistungsstellers (2) nach Maßgabe des Verhältnisses der auslegungsmäßigen Nennspannung und der Netzspannung so verändert wird, daß die am Glühzünder (1) umgesetzte Verlustleistung annähernd konstant ist.

**5.** Feuerungsautomat nach Anspruch 4, dadurch gekennzeichnet, daß der Leistungssteller (2) das Tastverhältnis TV gemäß der Formel

$$TV = \frac{1}{INT\left(\left(\frac{U_{ist}}{120}\right)^2 + 0,5\right)}$$

bestimmt ist, wobei $U_{ist}$ der Istwert der Netzspannung ist.

**6.** Feuerungsautomat nach Anspruch 5, dadurch gekennzeichnet, daß der Leistungsteller (2) einen ersten Operationsverstärker (15) aufweist, auf dessen nicht invertierenden Eingang der Ladezustand eines Kondensators (17) einwirkt, dessen Ladezustand von der Höhe der Netzspannung $U_{ist}$ beeinflußt wird, und auf dessen invertierenden Eingang ein aus einer Zenerdiode (11) und einem Widerstand (12) bestehender Spannungsteiler einwirkt, daß der Leistungsteller (2) einen zweiten Operationsverstärker (22) aufweist, der die Erzeugung von Zündimpulsen für einen Triac (31) unmittelbar nach einem Nulldurchgang der Netzspannung $U_{ist}$ zu Beginn einer positiven Halbwelle dieser Netzspannung $U_{ist}$ steuert.

**7.** Feuerungsautomat nach Anspruch 6, dadurch gekennzeichnet, daß die Operationsverstärker (15, 22) einen Gegentaktausgang aufweisen.

**8.** Feuerungsautomat nach Anspruch 6 oder 7, dadurch gekennzeichnet, daß die Operationsverstärker (15, 22) und der aus der Zenerdiode (11) und dem Widerstand (12) bestehende Spannungsteiler mit einer unstabilisierten Gleichspannung betrieben werden, deren Größe eine Funktion der Netzspannung $U_{ist}$ ist.

## Claims

**1.** An automatic firing arrangement having means for actuating an incandescent igniter (1), by which the incandescent igniter (1) can be heated up by means of mains voltage, wherein connected upstream of the incandescent igniter (1) is a power adjusting means (2), characterised in that the power adjusting means (2) cycles the mains voltage with an adjustable pulse duty factor TV in such a way that only individual whole full-wave trains of the mains voltage become effective at the incandescent igniter (1).

**2.** An automatic firing arrangement according to claim 1 characterised in that the incandescent igniter (1) is designed for operation at 120 volts, that the mains voltage is 230 volts (-15/+10%) and the pulse duty factor TV of the power adjusting means (2) is 1:4.

**3.** An automatic firing arrangement according to claim 2 characterised in that the pulse duty factor TV of 1:4 is produced by a procedure whereby after the transmission of a full wave train of the mains voltage the power adjusting means (2) subsequently blocks three full wave trains of the mains voltage.

**4.** A automatic firing arrangement according to claim 1 characterised in that the power adjusting means (2) has a first input (3) at which there is a signal corresponding to the design rated voltage for operation of the incandescent igniter (1), that it has a second input (5) at which there is a signal corresponding to the mains voltage, and that the pulse duty factor TV of the power adjusting means (2) is so varied in accordance with the relationship of the design rated voltage and the mains voltage that the power loss converted at the incandescent igniter (1) is approximately constant.

**5.** An automatic firing arrangement according to claim 4 characterised in that the power adjusting means (2) determines the pulse duty factor TV in accordance with the formula:

$$TV = \frac{1}{INT\left(\left(\frac{U_{ist}}{120}\right)^2 + 0.5\right)}$$

wherein $U_{ist}$ is the mains voltage actual value.

**6.** An automatic firing arrangement according to claim 5 characterised in that the power adjusting means (2) has a first operational amplifier (15), on whose non-inverting input acts the charge state of a capacitor (17) whose charge state is influenced by the magnitude of the mains voltage $U_{ist}$ and on whose inverting input acts a voltage divider comprising a Zener diode (11) and a resistor (12), and that the power adjusting means (2) has a second operational amplifier (22) which controls the production of trigger pulses for a triac (31) immediately after the passage-through-zero of the mains voltage $U_{ist}$ at the beginning of a positive half-wave of said mains voltage $U_{ist}$.

**7.** An automatic firing arrangement according to claim 6 characterised in that the operational amplifier (15, 22) has a push-pull output.

**8.** An automatic firing arrangement according to claim 6 or claim 7 characterised in that the operational amplifier (15, 22) and the voltage divider comprising the Zener diode (11) and the resistor (12) are operated with an unstabilised dc voltage whose magnitude is a function of the mains voltage $U_{ist}$.

**Revendications**

**1.** Appareil automatique d'allumage comprenant des moyens d'attaque d'un élément d'allumage par incandescence (1) au moyen desquels l'élément d'allumage par incandescence (1) peut être chauffé à l'aide de la tension du réseau, un variateur de puissance (2) étant monté en amont de l'élément d'allumage par incandescence (1),
caractérisé
en ce que le variateur de puissance (2) rythme la tension du réseau par un taux d'impulsions réglable TV tel que seuls certains trains entiers d'ondes complètes de la tension du réseau soient actifs sur l'élément d'allumage par incandescence (1).

**2.** Appareil automatique d'allumage selon la revendication 1, caractérisé en ce que l'élément d'allumage par incandescence (1) n'est conçu que pour fonctionner à 120 volts, en ce que la tension du réseau est de 230 volts (-15/+10%) et le taux d'impulsions TV du variateur de puissance (2) est de 1:4

**3.** Appareil automatique d'allumage selon la revendication 2, caractérisé en ce que le taux d'impulsions TV de 1:4 est réalisé par le fait qu'après avoir laissé passer un train d'ondes complet de la tension du réseau le variateur de puissance (2) bloque ensuite trois trains d'ondes complets de la tension du réseau

**4.** Appareil automatique d'allumage selon la revendication 1. caractérisé en ce que le variateur de puissance (2) comprend une première entrée (3) à laquelle est appliqué un signal qui correspond à la tension nominale de conception prévue pour le fonctionnement de l'élément d'allumage par incandescence (1), en ce qu'il comprend une deuxième entrée (5) qui reçoit un signal correspondant à la tension du réseau et en ce que le taux d'impulsions TV du variateur de puissance (2) est modifié en fonction du rapport de la tension nominale conforme à la conception et de la tension du réseau de manière que la puissance de perte transformée et transférée à l'élément d'allumage par incandescence (1) soit approximativement constante.

**5.** Appareil automatique d'allumage selon la revendication 4, caractérisé en ce que le variateur de puissance (2) détermine le taux d'impulsions TV selon la formule

$$TV = \frac{1}{INT\left(\left(\frac{U_{réel}}{120}\right)^2 + 0,5\right)}$$

$U_{réel}$ étant la valeur réelle de la tension du réseau

**6.** Appareil automatique d'allumage selon la revendication 5, caractérisé en ce que le variateur de puissance (2) comprend un premier amplificateur opérationnel (15) sur l'entrée sans inversion duquel agit l'état de charge d'un condensateur (17) dont l'état de charge est soumis au niveau de la tension du réseau $U_{réel}$ et sur l'entrée avec inversion duquel agit un diviseur de tension se composant d'une diode de Zener (11) et d'une résistance (12), en ce que le variateur de puissance (2) comprend un deuxième amplificateur opérationnel (22) qui commande la génération d'impulsions d'allumage d'un triac (31) immédiatement après un passage par zéro de la tension du réseau $U_{réel}$ au début d'une demi-onde positive de cette tension du réseau $U_{réel}$ .

**7.** Appareil automatique d'allumage selon la revendication 6, caractérisé en ce que les amplificateurs opérationnels (15, 22) comprennent une sortie symétrique

**8.** Appareil automatique d'allumage selon la revendication 6 ou 7, caractérisé en ce que les amplificateurs opérationnels (15, 22) et le diviseur de tension se composant de la diode de Zener (11) et de la résistance (12) sont actionnés par une tension continue non stabilisée, dont le niveau est une fonction de la tension du réseau $U_{réel}$.

# Fig. 1

# Fig. 2

# Fig. 3

# Fig. 4